# EUROPÄISCHE PATENTSCHRIFT

(11) **EP 0 351 700 B1**
(45) Veröffentlichungstag und Bekanntmachung des Hinweises auf die Patenterteilung: **15.09.1993**
(21) Anmeldenummer: 89112732.6
(22) Anmeldetag: 12.07.1989
(51) Int. Cl.: G01F 23/26

(54) **Anordnung zur kapazitiven Füllstandsmessung**
Arrangement for the capacitive fluid level measurement
Dispositif pour la mesure capacitive de niveau de remplissage

(30) Priorität: 16.07.1988 DE 3824231
(43) Veröffentlichungstag der Anmeldung: 24.01.1990
(73) Patentinhaber: Endress u. Hauser GmbH u.Co., D-79689 Maulburg (DE)
(72) Erfinder: Waldschmidt, Horst, D-7853 Steinen (DE); Kahlert, Albrecht, D-7860 Schopfheim-Wiechs (DE)
(74) Vertreter: Leiser, Gottfried, Dipl.-Ing.

(56) Entgegenhaltungen:
- DE-A- 2 521 687
- US-A- 4 010 650
- REGELUNGSTECHNISCHE PRAXIS, Band 24, Nr. 6, Juni 1982, Seiten 192-197, München, DE; D.E. SCHAUDEL et al.: "Selbstüberwachender und störsicherer Füllstand-Grenzschalter"

## Beschreibung

Die Erfindung betrifft eine Anordnung zur kapazitiven Füllstandmessung in einem Behälter aus elektrisch nicht leitfähigem Material mit zwei kapazitiven Sonden, die im Behälter derart im Abstand voneinander angeordnet sind, daß die Kapazität zwischen den beiden Sonden vom Füllstand abhängt, und mit einem in der Nähe des Behälters angeordneten Meßumformer, der mit einem davon getrennten Auswertegerät über eine Verbindungsleitung verbunden ist und einen von der Sondenkapazität abhängigen hochfrequenten Meßwechselstrom in ein für die Übertragung über die Verbindungsleitung geeignetes elektrisches Meßwertsignal umformt, aus dem im Auswertegerät der zu messende Füllstand ermittelt wird.

Anordnungen dieser Art können sowohl zur kontinuierlichen Füllstandmessung als auch zur Überwachung von Grenzständen verwendet werden. Bei der kontinuierlichen Füllstandmessung erstrecken sich die kapazitiven Sonden über die ganze Höhe des Behälters, und sie sind so ausgebildet, daß sich die Kapazität möglichst linear mit dem Füllstand ändert. Zur Grenzstandüberwachung werden kapazitive Sonden von geringer Länge auf der Höhe des zu überwachenden Füllstands so angeordnet, daß sich die Kapazität sprunghaft ändert, wenn der zu überwachende Grenzstand über- oder unterschritten wird.

Bei der kapazitiven Füllstandmessung in Metallbehältern wird gewöhnlich die vom Füllstand abhängige Kapazität zwischen einer im Behälter angeordneten Sonde und der Behälterwand gemessen, wobei die Behälterwand eine geerdete Bezugselektrode bildet, die zugleich als Abschirmung dient (siehe etwa D.E. Schaudel et al.: "Selbstüberwachender und störsicherer Füllstand-Grenzschalter" in REGELUNGSTECHNISCHE PRAXIS, Bd.24, Nr.6, Juni 1982, S. 192-197). In Behältern aus elektrisch nicht leitfähigem Material, wie Kunststofftanks, fehlt eine solche natürliche Bezugselektrode. Deshalb werden im Behälter zwei parallele Sonden angeordnet, und die Kapazität zwischen den beiden parallelen Sonden wird als Maß für den Füllstand gemessen (siehe etwa US-A-4,010,650). Wegen des Fehlens der geerdeten Bezugselektrode wirken sich jedoch Stör- und Streukapazitäten auf die Messung aus. Kunststofftanks werden insbesondere bei chemisch aggressiven Füllgütern, wie Säuren oder Laugen, verwendet, die Metallbehälter angreifen würden. Da solche Füllgüter eine hohe elektrische Leitfähigkeit aufweisen, gehört insbesondere auch die Kapazität des Füllguts gegen Erde zu den Stör- und Streukapazitäten, die sich auf die Füllstandmessung auswirken. Die Folge davon sind beträchtliche Meßfehler durch Änderungen der Erdkapazität infolge äußerer Einflüsse, eine Berührungsempfindlichkeit bei unbedeckten Sonden, die sich auf den Nullpunktabgleich auswirkt, sowie eine Nichtlinearität des Zusammenhangs zwischen der gemessenen Kapazität und dem Füllstand bei der kontinuierlichen Füllstandmessung.

Aufgabe der Erfindung ist die Schaffung einer Anordnung der eingangs angegebenen Art, die mit geringem Schaltungsaufwand die Auswirkungen von Stör- und Streukapazitäten auf die Füllstandmessung in Behältern aus elektrisch nicht leitfähigem Material beseitigt.

Nach der Erfindung wird diese Aufgabe dadurch gelöst, daß in die Verbindungsleitung zwischen dem Meßumformer und dem Auswertegerät eine Filteranordnung eingefügt ist, die die Übertragung des hochfrequenten Meßwechselstroms verhindert und die Übertragung des Meßwertsignals zuläßt.

Bei der Anordnung nach der Erfindung liegt die Filteranordnung in dem Stromkreis, der durch die über die Erde geschlossene Reihenschaltung aus der Erdkapazität des Füllguts und den Stör- und Streukapazitäten der Verbindungsleitung und der daran angeschlossenen Schaltungen gebildet ist. Die Filteranordnung verhindert somit, daß ein hochfrequenter Meßwechselstrom über diesen Stromkreis fließt und das Meßergebnis beeinflußt. Dadurch sind sowohl die Nichtlinearität als auch der Einfluß der Erdungsverhältnisse auf die Messung beseitigt. Auch die Berührungsempfindlichkeit bei unbedeckten Sonden ist nicht mehr vorhanden, da die Schaltung infolge der Filteranordnung hochfrequenzmäßig erdfrei ist und an einem beliebigen Punkt geerdet werden darf.

Diese vorteilhaften Wirkungen lassen sich mit sehr geringem Schaltungsaufwand erzielen. Die Filteranordnung kann im einfachsten Fall aus einem in die Verbindungsleitung eingefügten Sperrkreis bestehen, der durch einen auf die Frequenz des Meßwechselstroms abgestimmten Parallelschwingkreis gebildet ist. Besteht die Verbindungsleitung aus einer Leitung mit mehreren Adern, so wird ein solcher Sperrkreis in jeden Leiter der Verbindungsleitung eingefügt. In jedem Fall wird die Filteranordnung vorzugsweise unmittelbar am Ausgang des Meßumformers angeordnet.

Weitere Merkmale und Vorteile der Erfindung ergeben sich aus der folgenden Beschreibung von Ausführungsbeispielen, die in den Zeichnungen dargestellt sind. In den Zeichnungen zeigt:
- Fig. 1: eine Anordnung nach der Erfindung zur kapazitiven Füllstandmessung in einem Behälter aus elektrisch nicht leitfähigem Material für den Fall einer kontinuierlichen Füllstandmessung,
- Fig. 2: eine schematische Darstellung der bei der Anordnung von Fig. 1 vorhandenen Kapazitäten, die sich auf die Füllstandmessung auswirken,
- Fig. 3: das elektrische Ersatzschaltbild der Anordnung von Fig. 1 bei fehlender Filteranordnung,
- Fig. 4: das elektrische Ersatzschaltbild der Anordnung von Fig. 1 bei unbedeckten Sonden,
- Fig. 5: das elektrische Ersatzschaltbild von Fig. 3 bei Vorhandensein der Filteranordnung und
- Fig. 6: eine der Fig. 1 entsprechende Darstellung für den Fall einer Zweidrahtleitung als Beispiel für eine mehradrige Verbindungsleitung.

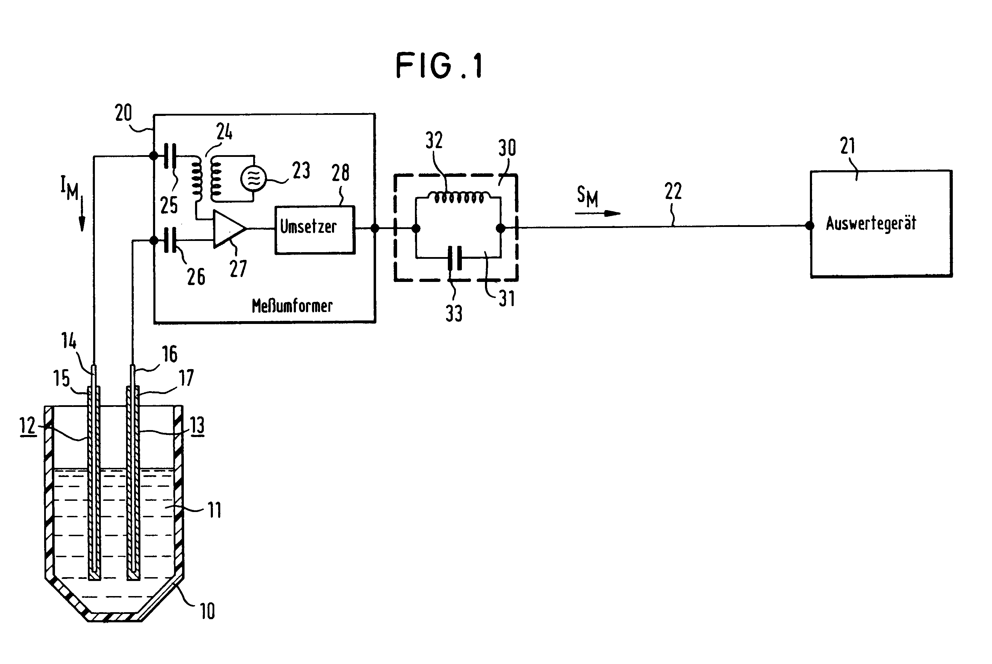

Fig. 1 zeigt schematisch einen Behälter 10 aus elektrisch nicht leitfähigem Material, z.B. Kunststoff, der ein Füllgut 11 enthält, dessen Füllstand gemessen werden soll. Zur Messung des Füllstands sind im Behälter zwei stabförmige Sonden 12, 13, die sich der Höhe nach über den ganzen zu erfassenden Füllstandsbereich erstrecken, im Abstand voneinander angeordnet. Die Sonde 12 besteht aus einem metallischen Sondenstab 14, der von einem Isoliermantel 15 umhüllt ist, und in gleicher Weise besteht die Sonde 13 aus einem metallischen Sondenstab 16, der von einem Isoliermantel 17 umhüllt ist. Die Isoliermäntel 15, 17 isolieren die Sondenstäbe von dem Füllgut 11, falls dieses elektrisch leitfähig ist, und sie schützen die Sondenstäbe gegen eine korrodierende oder aggressive Wirkung des Füllguts.

Die Füllstandmessung beruht darauf, daß die zwischen den beiden Sondenstäben gemessene Kapazität vom Grad der Bedeckung durch das Füllgut abhängt. Bei isolierenden Füllgütern bilden die beiden Sondenstäbe 14 und 16 die Elektroden eines Kondensators, dessen Dielektrikum in dem bedeckten Bereich durch das Füllgut und in dem nicht bedeckten Bereich durch Luft gebildet ist, so daß sich wegen der unterschiedlichen Dielektrizitätskonstanten dieser beiden Medien eine Abhängigkeit der gemessenen Kapazität vom Füllstand ergibt. Bei dem in Fig. 1 angenommenen Fall eines elektrisch leitfähigen Füllguts bildet dagegen jeder Sondenstab 14 bzw. 16 in dem bedeckten Bereich mit dem leitfähigen Füllgut einen Kondensator, dessen Dielektrikum durch das Material des Isoliermantels 15 bzw. 17 gebildet ist. Zwischen den beiden Sondenstäben läßt sich die Reihenschaltung dieser beiden Einzelkapazitäten messen, wobei die Größe dieser Einzelkapazitäten und damit die gemessene Gesamtkapazität von dem Bedeckungsgrad abhängt.

Die Verwendung von zwei stabförmigen Sonden ist bei der Füllstandmessung in einem Behälter aus nicht leitfähigem Material erforderlich, weil - im Gegensatz zu der Füllstandmessung in einem Metallbehälter - die Behälterwand nicht als Gegenelektrode verwendet werden kann. Die beiden stabförmigen Sonden sind in Fig. 1 nur der Deutlichkeit wegen in beträchtlichem Abstand voneinander getrennt dargestellt; sie können in der Praxis mechanisch zu einer Baueinheit verbunden sein, beispielsweise in Form einer Doppelstabsonde. Natürlich können in an sich bekannter Weise anstelle von Stabsonden auch Seilsonden verwendet werden.

Zur Messung der füllstandabhängigen Sondenkapazität zwischen den beiden stabförmigen Sonden 12 und 13 ist in der Nähe des Behälters 10, gewöhnlich im Sondenkopf an der Oberseite des Behälters, ein Meßumformer 20 angeordnet, der mit einem an entfernter Stelle angeordneten Auswertegerät 21 durch eine Verbindungsleitung 22 verbunden ist. In Fig. 1 ist angenommen, daß die Verbindungsleitung 22 unsymmetrisch als Koaxialkabel ausgebildet ist, wobei zur Vereinfachung nur der Innenleiter dargestellt ist.

Der Meßumformer 20 enthält einen Oszillator 23, der eine hochfrequente Wechselspannung erzeugt, deren Frequenz beispielsweise in der Größenordnung von 1 MHz liegt. Die Wechselspannung wird über einen Übertrager 24 in den Stromkreis eingekoppelt, der die beiden Sonden 12 und 13 über zwei Koppelkondensatoren 25, 26 mit den beiden Eingängen eines Stromverstärkers 27 verbindet. In diesem Stromkreis fließt somit ein hochfrequenter Meßwechselstrom I_{M}, dessen Größe von der Kapazität zwischen den beiden Sonden 12 und 13 abhängt. Der Meßwechselstrom I_{M} wird von dem Stromverstärker 27 verstärkt.

An den Ausgang des Stromverstärkers 27 ist ein Umsetzer 28 angeschlossen, der den verstärkten Meßwechselstrom I_{M} in ein Meßwertsignal S_{M} umwandelt, das für die Übertragung über die Verbindungsleitung 22 geeignet ist. Das Meßwertsignal kann jede in der Meßtechnik an sich bekannte und übliche Form haben. Es kann beispielsweise nach einem weit verbreiteten Standard ein zwischen 4 und 20 mA veränderlicher Gleichstrom sein oder auch eine zwischen zwei Grenzwerten veränderliche Gleichspannung. Das vom Umsetzer 28 erzeugte Meßwertsignal S_{M} kann jedoch auch eine Impulsfolge sein, die die Information über die Größe des Meßwechselstroms in einer der üblichen Pulsmodulationsarten (Pulsamplitudenmodulation, Pulsdauermodulation, Pulsfrequenzmodulation, Pulsphasenmodulation, Pulscodemodulation) überträgt. Schließlich kann das Meßwertsignal S_{M} auch ein Wechselstrom oder eine Wechselspannung von niedrigerer Frequenz als der Meßwechselstrom I_{M} sein, wobei wiederum die Meßwertinformation durch eine geeignete Modulation des Wechselstroms oder der Wechselspannung übertragen wird. In allen diesen Fällen kann das Meßwertsignal S_{M} auf der Übertragungsleitung 22 einem Versorgungsgleichstrom bzw. einer Versorgungsgleichspannung überlagert sein, wenn gemäß einer gleichfalls bekannten und üblichen Technik die Übertragungsleitung 22 zugleich dazu verwendet wird, den Meßumformer 20 vom Auswertegerät 21 her mit der für seinen Betrieb erforderlichen Energie zu versorgen.

Behälter aus elektrisch nicht leitfähigem Material, wie Kunststofftanks, werden meist dann verwendet, wenn das Füllgut chemisch aggressiv ist und Metallbehälter angreifen würde. Solche chemisch aggressiven Füllgüter, wie Säuren oder Laugen, besitzen gewöhnlich eine hohe elektrische Leitfähigkeit. Dadurch ergeben sich Probleme bei einer kapazitiven Füllstandmessung in der zuvor beschriebenen Weise.

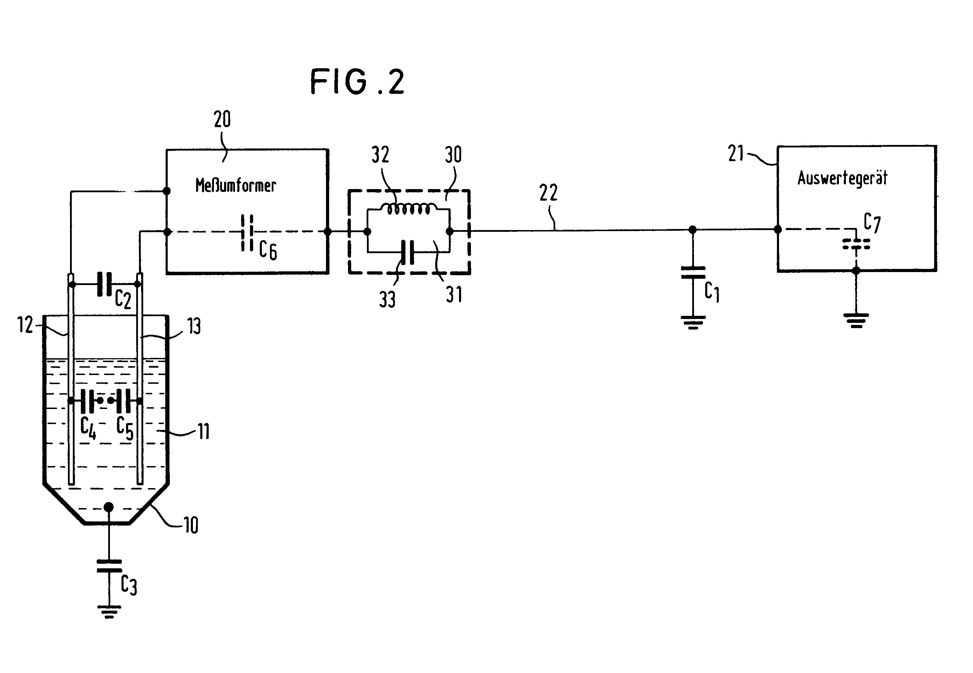

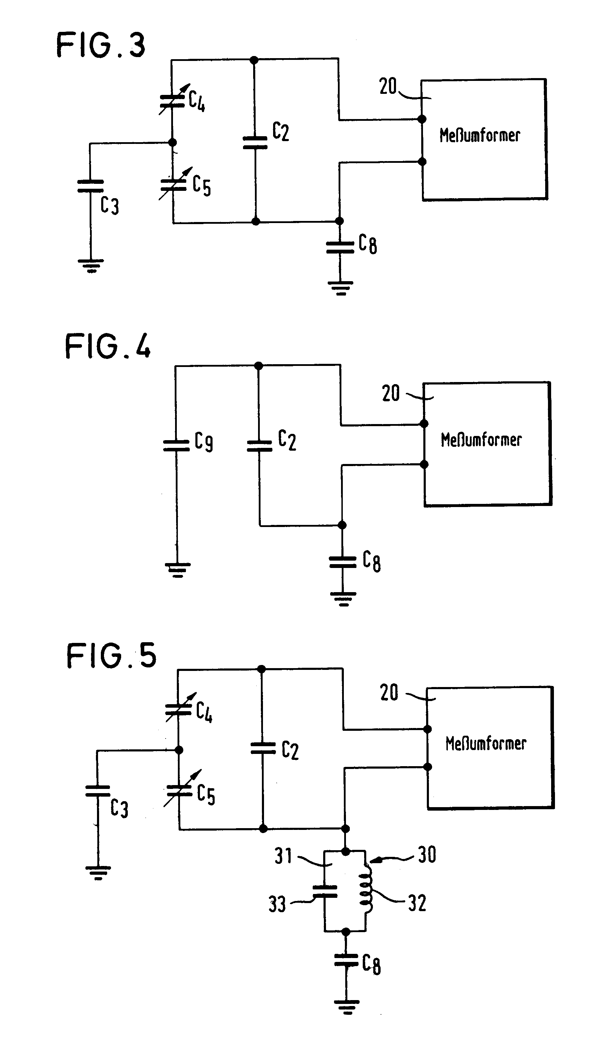

Fig. 2 zeigt nochmals schematisch die bisher beschriebene Meßanordnung, wobei zusätzlich verschiedene Kapazitäten dargestellt sind, die sich auf die Füllstandmessung auswirken können, und Fig. 3 zeigt das entsprechende elektrische Ersatzschaltbild für den Fall eines Füllguts mit hoher elektrischer Leitfähigkeit.

In Fig. 2 ist C₁ die Kapazität zwischen der Übertragungsleitung 22 und Erde, C₂ die Kapazität der Sondendurchführung und C₃ die Kapazität zwischen dem Füllgut und Erde. Die Meßkapazität zwischen den beiden Sonden besteht aus den beiden durch das Füllgut in Serie geschalteten Einzelkapazitäten C₄ und C₅. Mit C₆ sind alle Kapazitäten zwischen den Eingängen und den Ausgängen des Meßumformers 20 bezeichnet, und C₇ stellt die Kapazität des Auswertegeräts 21 und der daran angeschlossenen Geräte nach Erde dar.

Aus den Kapazitäten von Fig. 2 ergibt sich das elektrische Ersatzschaltbild von Fig. 3, wenn die Kapazitäten C₁, C₆ und C₇ von Fig. 2 zu einer einzigen Kapazität C₈ zusammengefaßt sind, die auf die Eingangsseite des Meßumformers 20 transformiert ist. Die Kapazitäten C₄ und C₅ sind von dem zu messenden Füllstand abhängig, während die Kapazitäten C₃ und C₈ von den jeweiligen örtlichen Gegebenheiten abhängig sind. Dadurch ergeben sich eine Reihe von Problemen für die Füllstandmessung.

Ein erstes Problem betrifft die Nichtlinearität des Zusammenhangs zwischen der gemessenen Kapazität und dem Füllstand. Obwohl sich die Kapazitäten C₄ und C₅ linear mit dem Füllstand ändern, ändert sich die gemessene Gesamtkapazität nicht linear mit dem Füllstand, da die Reihenschaltung aus den Kapazitäten C₃ und C₈ parallel zu C₅ liegt. Die Kapazität C₅ ändert sich deshalb mit dem Füllstand relativ weniger als die Kapazität C₄. In der Praxis wurden dadurch Nichtlinearitäten bis zu 6 % gemessen.

Ein zweites Problem betrifft die Meßgenauigkeit. Wie zuvor erwähnt, sind die Kapazitäten C₃ und C₈ von den örtlichen Gegebenheiten abhängig. Insbesondere kann sich die Erdkapazität C₃ des Füllguts auch während der Messung stark ändern, beispielsweise infolge von neben dem Behälter stehenden Personen, durch den Einfluß veränderlicher Füllstände von benachbarten Behältern, infolge veränderlicher Umgebungseinflüsse durch Transportsysteme neben dem Behälter, infolge plötzlicher Erdkontakte durch leitfähige Medien in Zu- und Ableitungen beim Befüllen oder Entleeren des Behälters usw. In der Praxis konnten infolge solcher Einflüsse beträchtliche Meßwertabweichungen gemessen werden.

Ein drittes Problem betrifft schließlich die Berührungsempfindlichkeit bei unbedeckten Sonden, also bei leerem Behälter. Für diesen Fall gilt das Ersatzschaltbild von Fig. 4, wobei die Kapazität C₉ die Kapazität der unbedeckten Sonde 12 gegen Erde darstellt. Die Meßanordnung wird für diesen Zustand auf den Füllstand Null abgeglichen. Nähert man beispielsweise die Hand der Sonde 12, so ändert sich die Kapazität C₉ und damit der abgeglichene Nullpunkt. Das gleiche gilt natürlich auch für die Annäherung anderer Fremdkörper an die Sonde 12.

Bei der Meßanordnung von Fig. 1 sind alle diese nachteiligen Erscheinungen dadurch unwirksam gemacht, daß am Ausgang des Meßumformers 20 in die Verbindungsleitung 22 eine Filteranordnung 30 eingefügt ist, die den Meßwechselstrom I_{M} sperrt, jedoch das Meßwertsignal S_{M} durchläßt. Im einfachsten Fall besteht die Filteranordnung, wie in Fig. 1 dargestellt ist, aus einem Sperrkreis 31, der durch einen auf die Frequenz des Meßwechselstroms I_{M} abgestimmten Parallelschwingkreis mit einer Spule 32 und einem Kondensator 33 gebildet ist.

Fig. 5 zeigt, wie das Ersatzschaltbild von Fig. 3 durch die Einfügung des Sperrkreises 31 geändert ist. Für den Meßwechselstrom I_{M} ist die parallel zur Kapazität C₅ liegende Reihenschaltung aus den beiden Kapazitäten C₃ und C₈ unterbrochen. Diese Unterbrechung beseitigt sowohl die durch diese Reihenschaltung verursachte Nichtlinearität als auch den durch Änderungen der Erdkapazität verursachten Einfluß der Erdungsverhältnisse auf die Messung. Auch die Berührungsempfindlichkeit ist nicht mehr vorhanden, da die Schaltung nun hochfrequenzmäßig erdfrei ist und an einem beliebigen Punkt geerdet werden darf.

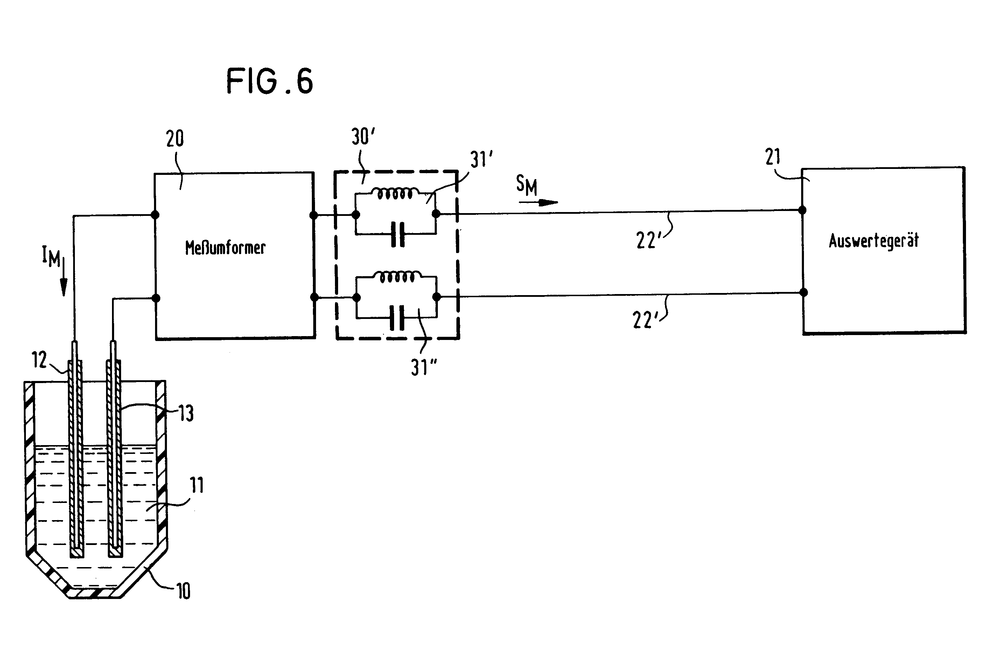

Fig. 6 zeigt eine der Fig. 1 entsprechende Darstellung für den Fall, daß die Verbindungsleitung zwischen dem Meßumformer 20 und dem Auswertegerät 21 durch eine Zweidrahtleitung 22′ gebildet ist. In diesem Fall ist die Filteranordnung 30′ so ausgebildet, daß sie ein Fließen des hochfrequenten Meßwechselstroms I_{M} über jeden der beiden Leiter der Zweidrahtleitung 22′ verhindert, was bei dem dargestellten Beispiel dadurch geschieht, daß in jeden der beiden Leiter am Ausgang des Meßumformers 20 ein Sperrkreis 31′ bzw. 31˝ eingefügt ist, der durch einen auf die Frequenz des Meßwechselstroms abgestimmten Parallelschwingkreis gebildet ist. Die übrigen Bestandteile der Anordnung von Fig. 6 entsprechen den mit den gleichen Bezugszeichen bezeichneten Bestandteilen der Anordnung von Fig. 1 und werden daher nicht nochmals beschrieben.

## Patentansprüche

1. Anordnung zur kapazitiven Füllstandmessung in einem Behälter (10) aus elektrisch nicht leitfähigem Material mit zwei kapazitiven Sonden (12,13), die im Behälter (10) derart im Abstand voneinander angeordnet sind, daß die Kapazität zwischen den beiden Sonden vom Füllstand abhängt, und mit einem in der Nähe des Behälters angeordneten Meßumformer (20), der mit einem davon getrennten Auswertegerät (21) über eine Verbindungsleitung (22) verbunden ist und einen von der Sondenkapazität abhängigen hochfrequenten Meßwechselstrom in ein für die Übertragung über die Verbindungsleitung (22) geeignetes elektrisches Meßwertsignal umformt, aus dem im Auswertegerät (21) der zu messende Füllstand ermittelt wird, wobei in die Verbindungsleitung (22) zwischen dem Meßumformer (20) und dem Auswertegerät (21) eine Filteranordnung (30) eingefügt ist, die die Übertragung des hochfrequenten Meßwechselstroms verhindert und die Übertragung des Meßwertsignals zuläßt.

2. Anordnung nach Anspruch 1, dadurch gekennzeichnet, daß die Filteranordnung wenigstens einen auf die Frequenz des Meßwechselstroms abgestimmten Parallelschwingkreis aufweist, der als Sperrkreis in Serie in einen Leiter der Verbindungsleitung eingefügt ist.

3. Anordnung nach Anspruch 2, dadurch gekennzeichnet, daß bei einer mehradrigen Verbindungsleitung in jeden Leiter der Verbindungsleitung ein Sperrkreis eingefügt ist.

4. Anordnung nach einem der vorhergehenden Ansprüche, dadurch gekennzeichnet, daß die Filteranordnung unmittelbar am Ausgang des Meßumformers angeordnet ist.

## Claims

1. Arrangement for the capacitive filling level measurement in a container (10) of electrically non-conductive material comprising two capacitive probes (12, 13) which are arranged in the container (10) spaced from each other in such a manner that the capacitance between the two probes depends on the filling level, and a measuring converter (20) which is arranged in the vicinity of the container and connected via a connecting line (22) to an evaluating unit (21) separated therefrom which converts a high-frequency measuring alternating current dependent on the probe capacitance to an electrical measured value signal which is suitable for transmission via the connecting line (22) and from which the filling level to be measured is determined in the evaluating unit (21), wherein into the connecting line (22) between the measuring converter (20) and the evaluating unit (21) a filter arrangement (30) is inserted which prevents the transmission of the high-frequency measuring alternating current and permits the transmission of the measured value signal.

2. Arrangement according to claim 1, characterized in that the filter arrangement comprises at least one parallel resonant circuit which is tuned to the frequency of the measuring alternating current and which is inserted as blocking circuit in series into a conductor of the connecting line.

3. Arrangement according to claim 2, characterized in that with a multi-conductor connecting line a blocking circuit is inserted into each conductor of the connecting line.

4. Arrangement according to any one of the preceding claims, characterized in that the filter arrangement is disposed directly at the output of the measuring converter.

## Revendications

1. Dispositif pour la mesure capacitive du niveau de remplissage d'un récipient (10) constitué en un matériau électriquement non-conducteur, comportant deux sondes capacitives (12, 13) qui sont disposées à l'intérieur dudit récipient (10) à une distance réciproque telle que la capacité entre les deux sondes dépend du niveau de remplissage, et comportant, disposé à proximité de ce récipient, un transducteur de mesures (20) qui est relié, par une ligne de transmission (22), à un appareil d'analyse (21) distinct et qui convertit un courant de mesure alternatif à haute fréquence, fonction de la capacité entre les sondes, en un signal électrique exprimant la valeur mesurée et approprié pour être transmis par la ligne (22), tandis que dans ladite ligne (22) est inséré, entre le transducteur (20) et l'appareil d'analyse (21), un dispositif de filtrage (30) qui empêche la transmission du courant de mesure alternatif à haute fréquence, mais permet la transmission du signal exprimant la valeur mesurée.

2. Dispositif selon la revendication 1, caractérisé en ce que le dispositif de filtrage présente au moins un circuit oscillant parallèle, accordé sur la fréquence du courant alternatif de mesure et monté en série dans un conducteur de la ligne pour servir de filtre d'arrêt.

3. Dispositif selon la revendication 2, caractérisé en ce que, si la ligne est à plusieurs conducteurs, un filtre d'arrêt est inséré dans chaque conducteur de ladite ligne.

4. Dispositif selon l'une des revendications précédentes, caractérisé en ce que le dispositif de filtrage est disposé immédiatement à la sortie du transducteur de mesure.
